# EUROPEAN PATENT SPECIFICATION

(11) **EP 3 713 824 B1**
(45) Date of publication and mention of the grant of the patent: **24.11.2021**
(21) Application number: 18811663.6
(22) Date of filing: 21.11.2018
(51) Int. Cl.: B62L 3/02, B62L 3/08, B60T 8/26, B60T 11/04, B60T 11/06

(54) **COMBINED BRAKING SYSTEM FOR VEHICLES, ESPECIALLY FOR MOTORCYCLES**
KOMBINIERTES BREMSSYSTEM FÜR FAHRZEUGE, INSBESONDERE FÜR MOTORRÄDER
SYSTÈME DE FREINAGE COMBINÉ POUR VÉHICULES, EN PARTICULIER POUR MOTOCYCLETTES

(30) Priority: 22.11.2017 IT 201700133654
(43) Date of publication of application: 30.09.2020
(73) Proprietor: PIAGGIO & C. S.p.A., 56025 Pontedera (Pisa) (IT)
(72) Inventor: BERNARDI, Luca, 56025 Pontedera Pisa (IT)
(74) Representative: Mitola, Marco
(86) International application number: PCT/IB2018/059183
(87) International publication number: WO 2019/102375

(56) References cited:
- EP-A1- 3 040 260
- EP-A2- 0 995 653
- WO-A1-2015/098371
- CN-A- 1 299 760
- JP-A- 2004 345 508
- JP-A- 2004 352 181

## Description

### FIELD OF APPLICATION

The present invention relates to a combined braking system, in particular for motorcycles.

### BACKGROUND ART

As is known, in the motorcycle sector the need is felt to perform a combined braking, that is, involving both the front and rear brake at the same time.

This need arises from safety reasons since the dynamic stability of the vehicle can be strongly affected by an unbalanced braking between the axles thereof.

In fact, in the absence of a combined braking dangerous hazards of yaw and loss of adhesion can occur.

In this regard, some national laws have made it compulsory to use braking systems for motorcycles that require combined braking.

Therefore there are solutions of combined type braking systems on the market which, with various mechanical solutions, guarantee combined braking.

Nevertheless, known solutions are often mechanically complex and expensive. An example of such solutions of the prior art is disclosed in IN217724B and in documents EP 3 040 260 A1 and CN 1 299 760 A.

### DISCLOSURE OF THE INVENTION

The need of solving the drawbacks and limitations mentioned with reference to the prior art is therefore felt.

In particular, the need is felt to provide a braking system 4 for combined-type cycles which, while ensuring a reliable combined braking, is both mechanically simple, reliable and cost-effective.

This requirement is met by a combined braking system according to claim 1.

### DESCRIPTION OF THE DRAWINGS

Further features and advantages of the present invention will appear more clearly from the following description of preferred non-limiting embodiments thereof, in which:
figures 1a and 1b are partial views of a combined braking system according to embodiments of the present invention;
figure 2 shows a sectional view of figure 1a along the sectional plane II-II in figure 1;
figure 3 is a view of the system in figure 1a in which only the front brake is actuated;
figure 4 is a view of the system in figure 1a in which only the rear brake is actuated;
figure 5 is a view of the system in figure 1a in which, following the actuation of the rear brake alone, the front brake is also actuated, obtaining a combined braking;
figure 6 shows a schematic view of a vehicle comprising a braking system according to the present invention.

Elements or parts of elements in common to the embodiments described below are referred to with the same reference numerals.

### DETAILED DESCRIPTION

With reference to the above figures, reference numeral 4 indicates as a whole an overall schematic view of a combined braking system according to the present invention.

For the purposes of the present invention, it should be noted that the braking system may be applied to vehicles 6 generally not necessarily powered, comprising cycles, motorcycles and vehicles with three or more wheels, as better described hereinafter.

The combined braking system 4 comprises at least a first braking device 8 operatively connected to a front wheel 12 placed on a first axle 16 of the vehicle 6 and at least a second braking device 20 operatively connected to a rear wheel 24 placed on a second axle 28 of the vehicle 6.

For the purposes of the present invention, the braking devices 8, 20 may be of any type; preferably, the first and second braking devices 8, 20 are drum brakes.

Moreover, preferably, but not necessarily, the first axle 16 is a front axle of the vehicle 6, which supports at least one front wheel 12 of the vehicle and the second axle 28 is a rear axle of the vehicle 6 which supports at least one rear wheel 24 of the vehicle 6.

Moreover, the braking system 4 comprises a first actuating cable 32 operatively connected to the first braking device 8 and to a first manual actuating lever 33, a second actuating cable 36 which can be operatively connected to the second braking device 20 and to a second manual actuating lever 34.

The actuating cables 32, 36 are operatively connected to an actuating lever and to a braking device. The actuating lever 33, 34 is for the user to perform braking; the actuating lever 33, 34 may be a typical lever arranged, for example, on a cycle or motorcycle handlebar but it may also consist of a pedal.

Typically, each actuating cable 32, 36 is mechanically connected to an actuating member of the relative braking device to enable actuation thereof, in a known manner.

Moreover, the braking system 4 comprises an interconnection mechanism 40 between the first and second actuating cables 32, 36. As better described hereinafter, the interconnection mechanism 40 serves to suitably interconnect the operation or rather the actuation of the braking devices 8, 20 so as to obtain the combined braking of the vehicle 6.

The interconnection mechanism 40 comprises a first rotating element 44 connected to the first actuating cable 32 so as to actuate the first braking device 8, when rotated under the traction action of said first actuating cable 32,

The traction action of the first actuating cable 32 is exerted by the user by acting on the first actuating lever or pedal 33.

The interconnection mechanism 40 further comprises a fixed support comprising a fixed abutment 52 and a second rotating element 56, crossed by the second actuating cable 36.

In particular, the second rotating element 56 is influenced in rotation by the traction action of the second actuating cable 36, by the manual action of the user on the second actuating lever or pedal 34, and is configured so as to intercept the first rotating element 44 and rotate it to also actuate the first braking device 8.

At the same time, the interconnection mechanism 40 is shaped so that the rotation of the first rotating element 44 by means of the first actuating cable 32 does not influence in rotation the second rotating element 56.

In this way, by manually acting on the first manual actuating lever or pedal 33, only the first braking device 20 is actuated; conversely, by manually acting on the second manual actuating lever or pedal 34, the second braking device 20 is mainly actuated and the first braking device 8 is also secondarily actuated.

Preferably, elastic contrast means 60 are interposed between the fixed abutment 52 and the second rotating element 56, which influence the second rotating y element 56 away from the first rotating element 44 to counteract the influence of the second rotating element 56 on the first rotating element 44.

In other words, the thrust action exerted by the elastic contrast means 60, as long as it prevails over the forces acting on the second rotating element 56, mechanically disengages the first and second rotating elements 44, 56 from each other in such a way as to oppose a combined operation of the system, i.e. of braking. On the other hand, when the forces acting on the second rotating element 56 overcome the action of the elastic contrast means 60, then the rotation of the second rotating element 56, consequent to the actuation of the second braking device 20 by the second manual actuating n lever 34 causes the rotation of the first rotating element 44 and therefore also the actuation of the first braking device 8.

To this end, the second rotating element 56, in the rest configuration or when not in use, is resting on said first rotating element 44 so as to rotate, dragging with it in rotation the first rotating element 44, when it overcomes the contrast action of the elastic contrast means 60. For example, said elastic contrast means 60 comprise a coil spring wound around the second actuating cable 36.

The second actuating cable 36 is a Bowden cable having a wire 64 slidingly housed in an outer sheath 68. The wire is typically a steel wire consisting of one or more twisted, steel strands. The outer sheath 68 is preferably internally lined with anti-friction material, such as Teflon, to facilitate the sliding of the wire 64 therein.

The outer sheath 68 is abutted against the second rotating element 56 and against a support 37 of the second manual actuating n lever 34, so as to exert a reaction thrust on said second rotating element 56, when the wire 64 of the second actuating cable 36 is pulled.

In other words, by pulling the second actuating cable 36 through the second actuating lever 34, the wire 64 slides inside the outer sheath 68 and, in doing so, it activates the corresponding second braking device 20. At the same time, the outer sheath 68 of the second actuating cable 36, being constrained to the support 37 of the second actuating lever 34 and to the second rotating element 56, cannot slide and is forced to deform elastically, thereby releasing the reaction on the second rotating element 56 .

In this way, the outer sheath 68 of the second actuating cable 36 is able to exert a reaction thrust on the second rotating element 56.

Initially this reaction on the second rotating element 56 is in turn countered and overcome by the elastic contrast means 60 which tend to move the second rotating element 56 away from the first rotating element 44. When the reaction on the second rotating element 56 overcomes the elastic action of the elastic contrast means 60, following an increase in the sliding of the wire 64, i.e. a greater actuation by the user of the second manual actuating lever 34, then the second rotating element 56 abuts against the first rotating element 44 and moves it in rotation, thus generating the actuation of the first braking device 8, without the user having exerted any action on the first manual actuating lever 33.

According to a preferred embodiment, the first and second rotating elements 44, 56 are hinged on the same fulcrum 72.

The second rotating element 56 comprises a pair of arms 76, 80 opposite each other with respect to the fulcrum 72, wherein a first arm 76 is influenced by the outer sheath 68 of the second actuating cable 36 and a second arm 80 is configured to influence in rotation the first rotating element 44.

The second arm 80 is, for example, provided with a cylindrical thrust pin 84 on a corresponding abutment 88 of the first rotating element 44.

For example, the abutment 88 of the first rotating element 44 is concave towards the cylindrical pin 84 so as to be counter-shaped with respect to the latter. Moreover, such a cylindrical coupling facilitates reciprocal rotation between the first and the second rotating elements 44, 56 at the mutual contact, avoiding possible jamming of the interconnection mechanism 40. In a particular embodiment of the invention (not shown), the cylindrical pin 84 moves within an eyelet configured in such a way that the pin 84 is in abutment with said eyelet when the braking system is at rest, i.e. not actuated.

Preferably, the first actuating cable 32 is a Bowden cable having an outer sheath 68 and a tie-rod 92, said tie-rod 92 being divided into two pieces 93, 94.

According to a possible embodiment, the first piece 93 is connected to both the first rotating element 44, by means of a pin 96 and a slot 98 in which the pin 96 slides, and to the first manual actuating lever 33; the second piece 94 is connected to the first braking device 8, preferably without clearance.

According to a further possible embodiment, the first actuating cable 32 is a Bowden cable having an outer sheath 68 and a tie-rod 92 divided into two pieces 93, 94; the first piece 93 is connected both to the first rotating element 44 and to the first actuating lever 33; the second piece 94 is connected to the first braking device 8.

According to an embodiment, the first piece 93 is connected to the first rotating element 44 by means of a pin 96 which engages on a slot 98; in this configuration, the second piece 94 is connected to the first braking device 8 and to the first rotating element 44 without clearance.

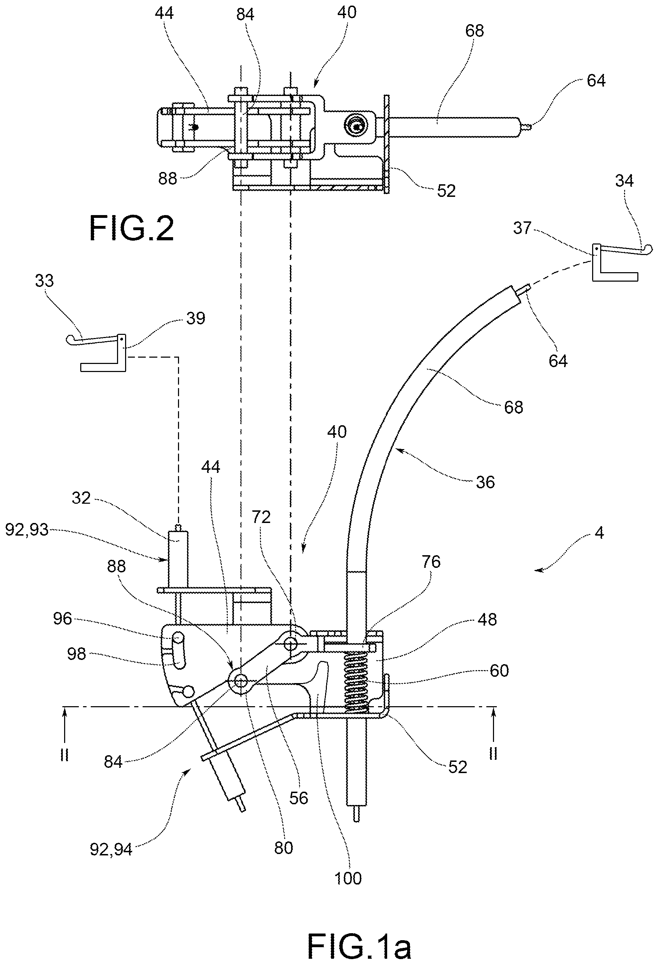

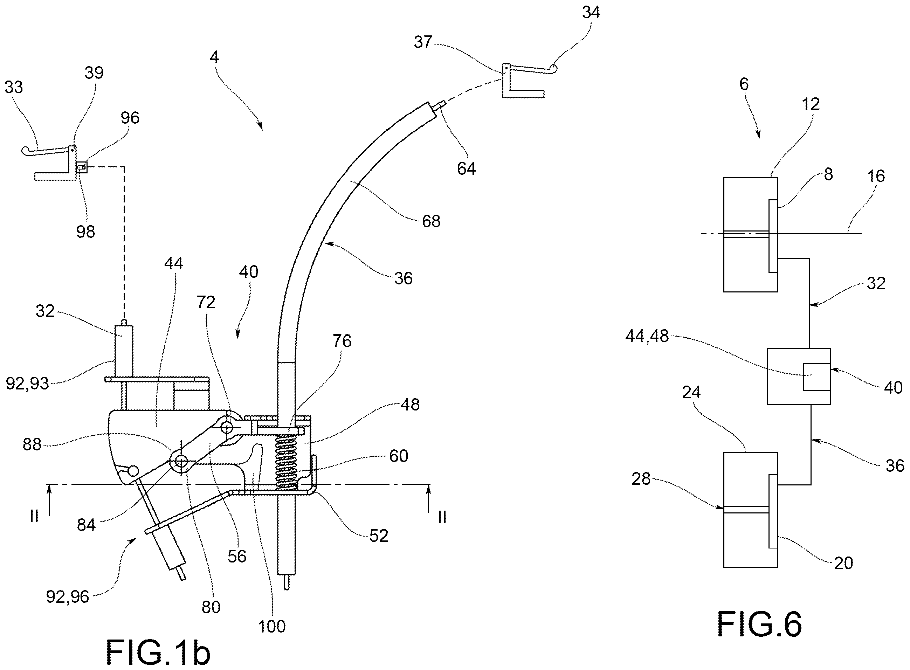

According to a further embodiment (figure 1b), the first piece 93 is connected to the first rotating element 44 without clearance, while a clearance is provided between the first manual lever 33 and a relative support 39 of the first manual lever 33: this clearance can also in this case be obtained by means of a coupling with a pin which engages on a slot. The clearance serves to allow the extension of the first piece 93 when, following the actuation of the second manual lever 34, the second rotating element 56 also rotates the first rotating element 44, without the user having in turn actuated the first manual lever 33.

In general, between at least one of said first and second pieces 93, 94 and the first rotating element 44 there should be a connection allowing an overall relative stroke between the first actuating cable 32 and the first rotating element 44 when, following the actuation of the second manual lever 34, the second rotating element 56 also rotates the first rotating element 44.

Preferably, said slot 98 has an extension or stroke not less than the displacement or stroke of the second rotating element 56 under the dragging action of the first rotating element 44.

The stroke between the pin 96 and the relative slot 98 serves to allow the traction of the second piece 94 of the tie-rod 92 and therefore the activation of the first braking device 8, even without having actuated the first manual actuating lever 33. According to a further embodiment, the interconnection mechanism 40 comprises an end stop 100 which limits the rotation stroke of the first arm 76 of the second rotating element 56 in the event of a fault or breakage of the second piece 94 of the first actuating cable 32. In fact, in case of fault of the second piece 94 of the first actuating cable 32, the first rotating element 44 would be idle and the second rotating element 56 would only encounter the resistance of the elastic contrast means 60 and no longer the thrust exerted by said second piece 94. Due to the end stop 100, the driver does not perceive the brake of the rear wheel 24 as too soft or even as not working.

The operation of a combined brake system according to the present invention shall now be described.

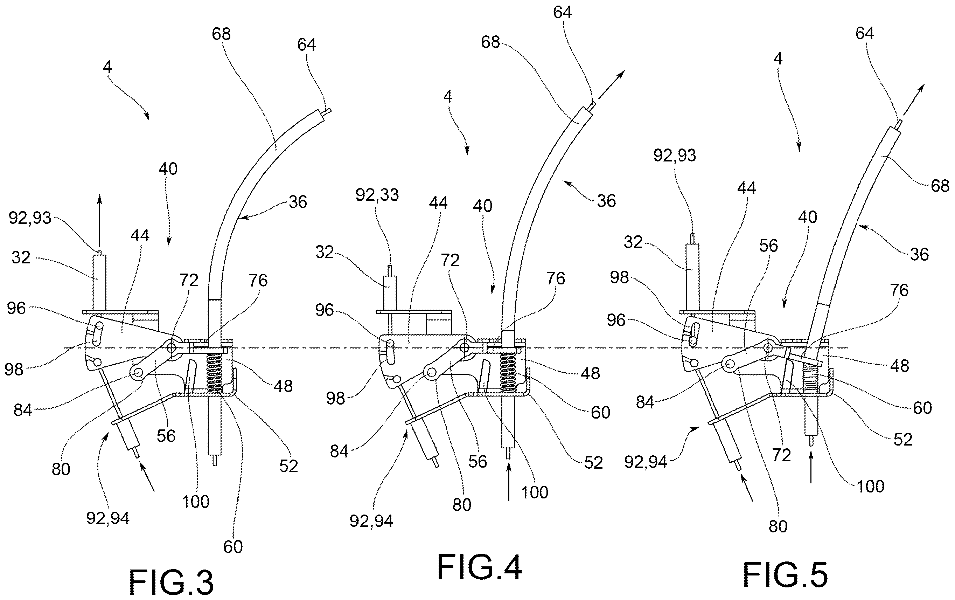

In particular, if the first manual actuating lever 33 is actuated, the braking system is able to perform a conventional braking action (figure 3), that is, to actuate only the corresponding first braking device 8 in a known manner.

In particular, the wire 64 of the first actuating cable 32 is driven by the first manual actuating lever 33 and therefore generates the rotation of the first rotating element alone which, due to the second section 94, activates the corresponding first braking device 8. In this condition, the second rotating element 56 is in no way influenced and the braking does not involve the second braking device 20.

If the second manual actuating lever 34 is actuated, the braking system is capable of both performing a single braking of the corresponding second braking device (figure 4) and a combined braking (figure 5).

In particular, during the first stroke of the second manual actuating lever 34,
the second actuating cable 36 is pulled, the wire 64 slides inside the outer sheath 68 and, in doing so, it activates the corresponding second braking device 20. At the same time, the outer sheath 68 of the second actuating cable 36 is constrained to the second actuating lever 34 and therefore cannot in turn move or slide. For this reason, the outer sheath 68 of the second actuating cable 36 tends to stretch elastically, thus releasing the reaction on the second rotating element 56.

Initially this reaction on the second rotating element 56 is in turn countered and overcome by the elastic contrast means 60 which tend to move the second rotating element 56 away from the first rotating element 44 (figure 4).

In this condition, the braking is still conventional, as it involves only the second braking device 20.

When the reaction on the second rotating element 56 overcomes the elastic action of the elastic contrast means 60, following an increase in the sliding of the wire 64, i.e. a greater actuation by the user of the second manual actuating lever 34, then the second rotating element 56 abuts against the first rotating element 44 and moves it in rotation, thus generating the actuation of the first braking device 8, without the user having exerted any action on the first manual actuating lever 33. This operation represents a braking of the combined type, since even if acting on a single manual actuating lever acting on a braking device, the activation also of a separate braking device is obtained, not directly connected to said single manual actuating lever.

It should be noted that in the combined operation, the stroke between the pin 96 and the relative slot 98 serves to allow the traction of the second piece 94 of the tie-rod 92 and therefore the activation of the first braking device 8, even without having actuated the first manual actuating lever 33.

It should also be noted that the interconnection mechanism 40 is configured so as to function both in case of fault of the second piece 94 of the first actuating cable 32 and in the event of a fault in the cable or rear wire 64: in this way, the braking of the vehicle by means of the brake not affected is always possible.

As can be appreciated from the description, the present invention allows overcoming the drawbacks of the prior art.

In particular, the braking system is particularly simple and cost-effective from a mechanical point of view.

However, the braking system always ensures combined braking in a reliable and safe manner.

The interconnection mechanism is in fact able to guarantee both single (conventional) braking and combined braking.

The braking system can also be easily calibrated according to the user's needs, by acting appropriately on the preload of the contrast spring and/or the sizing of the corresponding rotating transmissions.

The present invention lends itself to being effectively applied to cycles, motorcycles and to any motorized motor vehicle also as back-fitting, i.e. as an adaptation of a pre-existing braking system.

A man skilled in the art, in order to meet contingent and specific requirements, may make several modifications and variants to the brake systems described above, all of which fall within the scope of the invention as defined by the following claims.

## Claims

1. Combined braking system (4) for vehicles (6) comprising:
- at least a first braking device (8) operatively connected to a front wheel (12) of the vehicle (6),
- at least a second braking device (20) operatively connected to a rear wheel (24) of the vehicle (6),
- a first actuating cable (32) operatively connected to the first braking device (8) which can be connected to a first actuating lever (33), a second actuating cable (36) which can be operatively connected to the second braking device (20) and to a second actuating lever (34),
- an interconnection mechanism (40) between the first and second actuating cables (32,36) comprising:
- a first rotating element (44) connected to the first actuating cable (32) in order to actuate the first braking device (8) when rotated,
- a second rotating element (56) configured to intercept the first rotating element (44) and rotate it to actuate the first braking device (8), influenced in rotation by the traction action exerted on the second actuating cable (36) by said second actuating lever (34),
wherein the second actuating cable (36) is a Bowden cable having a wire (64) slidingly housed in an outer sheath (68), **characterized in that** the outer sheath (68) is abutting against the second rotating element (56) so as to exert a reaction thrust on said second rotating element (56) when the wire (64) of the second actuating cable (36) is pulled by said second lever (34).

2. Combined braking system (4) according to claim 1, in which the second rotating element (56) is moved away from a fixed abutment (52) and from the first rotating element (44) by elastic contrast means (60).

3. Combined braking system (4) according to claim 2, in which said elastic contrast means (60) comprise a coil spring wound around the second actuating cable (36).

4. Combined braking system (4) according to claim 2 or 3, wherein said reaction thrust of the outer sheath (68) of the second actuating cable (36) is countered by elastic contrast means (60).

5. Combined braking system (4) according to any of the claims from 1 to 4, wherein the second rotating element (56), in the rest configuration or when not in use, is resting on said first rotating element (44) so as to rotate, dragging with it in rotation the first rotating element (44), when the reaction thrust of the outer sheath (68) of the second actuating cable (36) overcomes the contrast action of the elastic contrast means (60).

6. Combined braking system (4) according to any one of the claims from 1 to 5, wherein the first and second rotating elements (44, 56) are hinged on the same fulcrum (72).

7. Combined braking system (4) according to any of the preceding claims, wherein the second rotating element (56) comprises a pair of arms (76, 80) opposite each other with respect to the fulcrum (72), the first arm (76) being influenced by an outer sheath (68) of the second actuating cable (36), the second arm (80) being configured to influence in rotation the first rotating element (44).

8. Combined braking system (4) according to claim 7, wherein said second arm (80) is provided with a cylindrical thrust pin (84) on an abutment (88) of the first rotating element (44).

9. Combined braking system (4) according to any of the claims from 7 to 8, wherein the interconnection mechanism (40) comprises an end stop (100) which limits the stroke in rotation of the second rotating element (56).

10. Combined braking system (4) according to any one of the claims from 1 to 9, wherein the first actuating cable (32) comprises a tie-rod (92) divided into two pieces (93, 94), wherein a first piece (93) is connected both to the first rotating element (44), by means of a pin (96) and a slot (98) in which the pin (96) slides, and to the first manual actuating lever (33), and wherein the second piece (94) is connected to the first braking device (8) and to the first rotating element (44) without clearance.

11. Combined braking system (4) according to any one of the claims from 1 to 9, wherein the first actuating cable (32) comprises a tie-rod (92) divided into two pieces (93, 94), wherein the first piece (93) is connected to the first rotating element (44) without clearance, while clearance is provided between the first manual lever (33) and a relative support (39) of the first manual lever (33).

12. Combined braking system (4) according to claim 10 or 11, wherein said slot (98) has an extension or stroke no less than the displacement or stroke of the second rotating element (56) when rotated by the first rotating element (44).

13. Combined braking system (4) according to any one of the claims from 1 to 12, wherein the interconnection mechanism (40) is shaped so that the rotation of the first rotating element (44) by means of the first actuating cable (32) does not influence in rotation the second rotating element (56).

14. Vehicle (6) comprising a braking system (4) according to any of the claims from 1 to 13, in particular wherein said vehicle (6) is a bicycle or motorcycle.

15. Vehicle (6) according to claim 14, wherein the first and second braking devices (8, 20) are drum brakes.

## Patentansprüche

1. Kombiniertes Bremssystem (4) für Fahrzeuge (6), umfassend:
- zumindest eine erste Bremsvorrichtung (8), die operativ mit einem Vorderrad (12) des Fahrzeugs (6) verbunden ist,
- zumindest eine zweite Bremsvorrichtung (20), die operativ mit einem Hinterrad (24) des Fahrzeugs (6) verbunden ist,
- ein erstes Betätigungskabel bzw. einen ersten Betätigungszug (32), operativ mit der ersten Bremsvorrichtung (8) verbunden, das bzw. der mit einem ersten Betätigungshebel (33) verbunden werden kann, ein zweites Betätigungskabel bzw. einen zweiten Betätigungszug (36), das bzw. der operativ mit der zweiten Bremsvorrichtung (20) und einem zweiten Betätigungshebel (34) verbunden werden kann,
- einen Verbindungsmechanismus (40) zwischen dem ersten und dem zweiten Betätigungskabel (32, 36), umfassend:
- ein erstes Drehelement (44), das mit dem ersten Betätigungskabel (32) verbunden ist, um die erste Bremsvorrichtung (8) bei Drehung zu betätigen,
- ein zweites Drehelement (56), das konfiguriert ist, das erste Drehelement (44) abzufangen und es zu drehen, um die erste Bremsvorrichtung (8) zu betätigen, die in Drehung durch die Zugwirkung beeinflusst wird, die von dem zweiten Betätigungshebel (34) auf das zweite Betätigungskabel (36) ausgeübt wird,
wobei das zweite Betätigungskabel (36) ein Bowdenzug mit einem Draht (64) ist, der gleitend in einem Außenmantel (68) untergebracht ist,
**dadurch gekennzeichnet, dass** der Außenmantel (68) gegen das zweite Drehelement (56) anliegt, um einen Reaktionsschub auf das zweite Drehelement (56) auszuüben, wenn der Draht (64) des zweiten Betätigungskabels (36) durch den zweiten Hebel (34) gezogen wird.

2. Kombiniertes Bremssystem (4) nach Anspruch 1, bei dem das zweite Drehelement (56) von einem fixierten bzw. festen Widerlager (52) und von dem ersten Drehelement (44) durch elastische Kontrastmittel (60) wegbewegt wird.

3. Kombiniertes Bremssystem (4) nach Anspruch 2, bei dem die elastischen Kontrastmittel (60) eine Schraubenfeder umfassen, die um das zweite Betätigungskabel (36) gewickelt ist.

4. Kombiniertes Bremssystem (4) nach Anspruch 2 oder 3, wobei dem Reaktionsschub des Außenmantels (68) des zweiten Betätigungskabels (36) elastische Kontrastmittel (60) entgegenwirken.

5. Kombiniertes Bremssystem (4) nach einem der Ansprüche 1 bis 4, wobei das zweite Drehelement (56) in der Ruhekonfiguration oder bei Nichtgebrauch auf dem ersten Drehelement (44) ruht bzw. aufliegt, um sich zu drehen, wobei es das erste Drehelement (44) mit sich in Drehung zieht, wenn der Reaktionsschub des Außenmantels (68) des zweiten Betätigungskabels (36) die Kontrastwirkung der elastischen Kontrastmittels (60) überwindet.

6. Kombiniertes Bremssystem (4) nach einem der Ansprüche 1 bis 5, wobei das erste und das zweite Drehelement (44, 56) an demselben Drehpunkt (72) angelenkt sind.

7. Kombiniertes Bremssystem (4) nach einem der vorhergehenden Ansprüche, wobei das zweite Drehelement (56) ein Paar Arme (76, 80) umfasst, die in Bezug auf den Drehpunkt (72) einander gegenüberliegen bzw. entgegengesetzt sind, wobei der erste Arm (76) von einem Außenmantel (68) des zweiten Betätigungskabels (36) beeinflusst wird, wobei der zweite Arm (80) konfiguriert ist, das erste Drehelement (44) in Drehung zu beeinflussen.

8. Kombiniertes Bremssystem (4) nach Anspruch 7, wobei der zweite Arm (80) mit einem zylindrischen Druckstift (84) an einem Widerlager (88) des ersten Drehelements (44) versehen ist.

9. Kombiniertes Bremssystem (4) nach einem der Ansprüche 7 bis 8, wobei der Verbindungsmechanismus (40) einen Endstopp bzw. -anschlag (100) umfasst, der den Drehhub des zweiten Drehelements (56) begrenzt.

10. Kombinierte Bremsanlage (4) nach einem der Ansprüche 1 bis 9, wobei das erste Betätigungskabel (32) eine Zugstange (92) umfasst, die in zwei Stücke (93, 94) geteilt ist, wobei ein erstes Stück (93) sowohl mit dem ersten Drehelement (44) mittels eines Stifts (96) und eines Schlitzes (98), in dem der Stift (96) gleitet, als auch mit dem ersten manuellen Betätigungshebel (33) verbunden ist, und wobei das zweite Stück (94) ohne Spiel bzw. Zwischenraum mit der ersten Bremsvorrichtung (8) und mit dem ersten Drehelement (44) verbunden ist.

11. Kombiniertes Bremssystem (4) nach einem der Ansprüche 1 bis 9, wobei das erste Betätigungskabel (32) eine Zugstange (92) umfasst, die in zwei Stücke (93, 94) geteilt ist, wobei das erste Stück (93) ohne Spiel bzw. Zwischenraum mit dem ersten Drehelement (44) verbunden ist, während zwischen dem ersten manuellen Hebel (33) und einer relativen Stütze bzw. Träger (39) des ersten manuellen Hebels (33) ein Spiel bzw. Zwischenraum bereitgestellt ist.

12. Kombiniertes Bremssystem (4) nach Anspruch 10 oder 11, wobei der Schlitz (98) eine Erstreckung oder einen Hub von nicht weniger als der Verlagerung oder dem Hub des zweiten Drehelements (56) aufweist, wenn es durch das erste Drehelement (44) gedreht wird.

13. Kombiniertes Bremssystem (4) nach einem der Ansprüche 1 bis 12, wobei der Verbindungsmechanismus (40) so geformt ist, dass die Drehung des ersten Drehelements (44) mittels des ersten Betätigungskabels (32) das zweite Drehelement (56) in Drehung nicht beeinflusst.

14. Fahrzeug (6) umfassend ein Bremssystem (4) nach einem der Ansprüche 1 bis 13, insbesondere wobei das Fahrzeug (6) ein Fahrrad oder Motorrad ist.

15. Fahrzeug (6) nach Anspruch 14, wobei die erste und zweite Bremsvorrichtung (8, 20) Trommelbremsen sind.

## Revendications

1. Système de freinage combiné (4) pour véhicules (6) comprenant :
- au moins un premier dispositif de freinage (8) raccordé fonctionnellement à une roue avant (12) du véhicule (6),
- au moins un second dispositif de freinage (20) raccordé fonctionnellement à une roue arrière (24) du véhicule (6),
- un premier câble d'actionnement (32) raccordé fonctionnellement au premier dispositif de freinage (8) qui peut être raccordé à un premier levier d'actionnement (33), un second câble d'actionnement (36) qui peut être raccordé fonctionnellement au second dispositif de freinage (20) et à un second levier d'actionnement (34),
- un mécanisme de raccordement mutuel (40) entre les premier et second câbles d'actionnement (32, 36) comprenant :
- un premier élément rotatif (44) raccordé au premier câble d'actionnement (32) afin d'actionner le premier dispositif de freinage (8) lorsqu'il est mis en rotation,
- un second élément rotatif (56) configuré pour intercepter le premier élément rotatif (44) et le mettre en rotation pour actionner le premier dispositif de freinage (8), dont la rotation est influencée par l'action de traction exercée sur le second câble d'actionnement (36) par ledit second levier d'actionnement (34),
dans lequel le second câble d'actionnement (36) est un câble Bowden ayant un fil métallique (64) logé en coulissement dans une gaine externe (68), **caractérisé en ce que** la gaine externe (68) bute contre le second élément rotatif (56) de façon à exercer une poussée de réaction sur ledit second élément rotatif (56) lorsque le fil métallique (64) du second câble d'actionnement (36) est tiré par ledit second levier (34).

2. Système de freinage combiné (4) selon la revendication 1, dans lequel le second élément rotatif (56) est déplacé en éloignement d'une butée fixe (52) et du premier élément rotatif (44) par des moyens de contraste élastiques (60).

3. Système de freinage combiné (4) selon la revendication 2, dans lequel lesdits moyens de contraste élastiques (60) comprennent un ressort hélicoïdal enroulé autour du second câble d'actionnement (36).

4. Système de freinage combiné (4) selon la revendication 2 ou 3, dans lequel ladite poussée de réaction de la gaine externe (68) du second câble d'actionnement (36) est contrée par les moyens de contraste élastiques (60).

5. Système de freinage combiné (4) selon l'une quelconque des revendications 1 à 4, dans lequel le second élément rotatif (56), dans la configuration de repos ou lorsqu'il n'est pas en utilisation, repose sur ledit premier élément rotatif (44) de façon à entrer en rotation, trainant avec lui en rotation le premier élément rotatif (44), lorsque la poussée de réaction de la gaine externe (68) du second câble d'actionnement (36) surpasse l'action de contraste des moyens de contraste élastiques (60).

6. Système de freinage combiné (4) selon l'une quelconque des revendications 1 à 5, dans lequel les premier et second éléments rotatifs (44, 56) sont articulés sur le même point d'appui (72).

7. Système de freinage combiné (4) selon l'une quelconque des revendications précédentes, dans lequel le second élément rotatif (56) comprend une paire de bras (76, 80) opposés l'un à l'autre vis-à-vis du point d'appui (72), le premier bras (76) étant influencé par une gaine externe (68) du second câble d'actionnement (36), le second bras (80) étant configuré pour influencer la rotation du premier élément rotatif (44).

8. Système de freinage combiné (4) selon la revendication 7, dans lequel ledit second bras (80) est muni d'une goupille de poussée cylindrique (84) sur une butée (88) du premier élément rotatif (44).

9. Système de freinage combiné (4) selon l'une quelconque des revendications 7 à 8, dans lequel le mécanisme de raccordement mutuel (40) comprend un élément d'arrêt terminal (100) qui limite la course en rotation du second élément rotatif (56).

10. Système de freinage combiné (4) selon l'une quelconque des revendications 1 à 9, dans lequel le premier câble d'actionnement (32) comprend une biellette de direction (92) divisée en deux pièces (93, 94), dans lequel une première pièce (93) est raccordée à la fois au premier élément rotatif (44), au moyen d'une goupille (96) et d'une fente (98) dans laquelle la goupille (96) coulisse, et au premier levier d'actionnement manuel (33), et dans lequel la seconde pièce (94) est raccordée au premier dispositif de freinage (8) et au premier élément rotatif (44) sans débattement.

11. Système de freinage combiné (4) selon l'une quelconque des revendications 1 à 9, dans lequel le premier câble d'actionnement (32) comprend une biellette de direction (92) divisée en deux pièces (93, 94), dans lequel la première pièce (93) est raccordée au premier élément rotatif (44) sans débattement, tandis qu'un débattement est prévu entre le premier levier manuel (33) et un support (39) relatif du premier levier manuel (33).

12. Système de freinage combiné (4) selon la revendication 10 ou 11, dans lequel ladite fente (98) a une extension ou une course non inférieure au déplacement ou à la course du second élément rotatif (56) lorsqu'il est mis en rotation par le premier élément rotatif (44).

13. Système de freinage combiné (4) selon l'une quelconque des revendications 1 à 12, dans lequel le mécanisme de raccordement mutuel (40) est mis en forme de sorte que la rotation du premier élément rotatif (44) au moyen du premier câble d'actionnement (32) n'influence pas la rotation du second élément rotatif (56).

14. Véhicule (6) comprenant un système de freinage (4) selon l'une quelconque des revendications 1 à 13, en particulier dans lequel ledit véhicule (6) est une bicyclette ou une motocyclette.

15. Véhicule (6) selon la revendication 14, dans lequel les premier et second dispositifs de freinage (8, 20) sont des freins à tambour.
